# EUROPÄISCHE PATENTSCHRIFT

(11) **EP 2 699 764 B1**
(45) Veröffentlichungstag und Bekanntmachung des Hinweises auf die Patenterteilung: **04.04.2018**
(21) Anmeldenummer: 12730191.9
(22) Anmeldetag: 13.06.2012
(51) Int. Cl.: F01D 5/14, F01D 5/28

(54) **SCHAUFEL FÜR EINE THERMISCHE STRÖMUNGSMASCHINE**
BLADE FOR A THERMAL TURBOMACHINE
AUBE POUR UNE TURBOMACHINE THERMIQUE

(30) Priorität: 20.06.2011 DE 102011077804
(43) Veröffentlichungstag der Anmeldung: 26.02.2014
(73) Patentinhaber: Siemens Aktiengesellschaft, 80333 München (DE)
(72) Erfinder: HAJE, Detlef, 02828 Görlitz (DE)
(86) Internationale Anmeldenummer: PCT/EP2012/061210
(87) Internationale Veröffentlichungsnummer: WO 2012/175387

(56) Entgegenhaltungen:
- EP-A1- 1 719 699
- DE-A1- 3 802 774
- FR-A1- 2 371 990
- FR-A1- 2 946 663
- GB-A- 718 382
- US-A1- 2003 129 061

## Beschreibung

Die vorliegende Erfindung betrifft eine Schaufel für eine thermische Strömungsmaschine, umfassend ein Schaufelblatt mit einer ersten Erstreckung in im Wesentlichen radialer Ausrichtung in Bezug auf eine Rotationsachse der Strömungsmaschine und einer quer zur ersten Erstreckung ausgebildeten zweiten Erstreckung sowie einen an das Schaufelblatt anschließenden Schaufelfuß, der das Schaufelblatt in der ersten Erstreckung abschließt. Sie betrifft außerdem ein Verfahren zur Herstellung einer solchen Schaufel.

Für fliehkraftbeanspruchte Bauteile von thermischen Strömungsmaschinen - beispielsweise Gasturbinen, Dampfturbinen und Kompressoren - werden derzeit Schaufeln aus Stahl- oder Titanwerkstoffen verwendet. Dagegen werden Fan-Schaufeln von Flugzeugtriebwerken - die auch unter die thermischen Strömungsmaschinen gezählt werden - ganz oder teilweise aus Faserverbundwerkstoffen hergestellt.

Stahl und Titan als Metallwerkstoffe weisen zwar hohe Festigkeiten auf, unterliegen aufgrund ihrer verhältnismäßig hohen Dichte jedoch auch hohen Fliehkräften. Somit sind die erreichbaren Strömungsquerschnitte begrenzt, was insbesondere die Leistungsgröße der Maschinen beschränkt.

Die Verwendung von Faserverbundwerkstoffen, die selbstverständlich leichter und daher geringeren Fliehkräften ausgesetzt sind, bietet sich jedoch nicht in allen Einsatzbereichen an. So besteht beispielsweise bei Dampfturbinen die Gefahr von so genannten Tropfenschlagangriffen, das heißt vom Auftreffen kleiner Wasserpartikel auf der Oberfläche der Schaufel. Durch diese Einwirkung würden Faserverbundwerkstoffe in kurzer Zeit zerstört, und zwar sowohl die Fasern selbst als auch die die Fasern verbindenden Matrixstrukturen.

Ein weiteres Problem besteht darin, dass Faserverbundwerkstoffe aus übereinander gelegten, ausgerichteten Faserlagen bestehen. Dies bedeutet, dass jede Faserlage im Wesentlichen in einer einzigen Erstreckungsrichtung ausgerichtet ist und daher auch insbesondere in Bezug auf diese ausgewählte Erstreckungsrichtung eine besondere Stabilität gewährleistet. Sollen dagegen Faserverbundwerkstoffe in mehrere Erstreckungsrichtungen Stabilität gewährleisten, so ist es notwendig, mehrere Faserlagen übereinander zu legen und zu verbinden, wobei die Faserlagen dann in verschiedene Richtungen ausgerichtet werden müssen. Um ein in sich wirklich stabiles System zu erreichen, ist es daher oftmals notwendig, zahlreiche Faserlagen miteinander zu verbinden, was gegebenenfalls zu übermäßigen Dicken führen kann.

Es ist also zu konstatieren, dass auf der einen Seite Metalle (insbesondere hochfeste und korrosionsresistente Metalle wie Stahl oder Titan) wegen ihrer Stabilitätseigenschaften (Resistenz gegen Flieh- und Torsionskräfte, Zug- und Dehnfestigtkeit und besondere Härteeigenschaften und Resistenz gegen Einwirkungen von Störobjekten) und auf der anderen Seite Faserverbundwerkstoffe wegen ihrer Dichteeigenschaften besonders vorteilhaft wären, um Schaufeln für Strömungsmaschinen auszubilden. Diese beiden Werkstoffe sind jedoch kaum miteinander in sinnvolle Verbünde zu bringen, weshalb sich im vorliegenden Fall das klassische Dilemma zwischen zwei technischen Stoßrichtungen ergibt, die einander im Endeffekt praktisch ausschließen. Es ist daher bisher kein vollkommen zufriedenstellendes Konzept vorhanden, wie man Schaufeln von thermischen Strömungsmaschinen einerseits stabil genug und andererseits leicht genug produzieren kann.

In der FR 2 946 663 A1 wird ein thermomechanisches Bauteil beschrieben, bei dem in der Oberflächenregion eine Graphenschicht mit einer Dicke zwischen nur 10 nm und 10 µm als Wärmesenke genutzt wird, um die Temperaturverteilung in dieser Region zu verbessern. Bei dem Bauteil kann es sich auch um einen Turbinenschaufel handeln. Aufgrund der sehr dünnen Ausführung dient die dort beschriebene Oberfächenbeschichtung jedoch nicht zur Erhöhung der Stabilität.

Aufgabe der vorliegenden Erfindung ist es daher, eine verbesserte Lösung für Schaufeln von thermischen Strömungsmaschinen bereitzustellen. Insbesondere wird dabei auf eine Erhöhung der Stabilität im Vergleich zu Faserverbundwerkstoffen und auf eine gleichzeitige Reduzierung der Dichte im Vergleich zu Metallen wie Stahl und Titan abgezielt.

Diese Aufgabe wird durch eine Schaufel gemäß Anspruch 1 und durch ein Verfahren gemäß Anspruch 13 gelöst.

Entsprechend ist eine Schaufel der eingangs genannten Art dadurch weitergebildet, dass die Schaufel lokalisiert in einem Innenbereich, abgewandt von einer Oberflächenregion, mindestens bereichsweise Graphen umfasst, wobei hierunter sowohl reines Graphen als auch Graphenverbindungen verstanden werden können, insbesondere auch Graphan. Graphen ist ein Werkstoff, der in den vergangenen Jahren immer mehr in den Fokus der Materialwissenschaften gerückt ist. Es ist die Bezeichnung für eine Modifikation des Kohlenstoffs einer im Wesentlichen zweidimensionalen Struktur, in der jedes Kohlenstoffatom von drei weiteren umgeben ist, so dass sich ein bienenwabenförmiges Muster ausbildet. Aufgrund der Vierwertigkeit des Kohlenstoffs müssen dabei je so genannter "Wabe" drei Doppelbindungen auftreten, die jedoch nicht lokalisiert sind. Es handelt sich also um eine Verkettung vergleichbar mit der von Benzolringen, wie sie aus der aromatischen Chemie bekannt sind.

Die physikalischen Eigenschaften von Graphen sind im Kontext der Erfindung vor allem folgende: Einerseits sind Graphen-Flächeneinkristalle innerhalb ihre Fläche außerordentlich steif und fest. Der Elastizitätsmodul entspricht mit circa 1020 GPA dem von normalem Graphit entlang der Basalebenen und ist fast so groß wie der von Diamanten. Seine Zugfestigkeit von 1,25 x 10¹¹ Pa ist die höchste, die je ermittelt wurde, und rund 125-mal höher als bei Stahl. Andererseits ist die Massendichte des Graphens (monokristallines Graphen hat eine Massendichte von 2260 kg pro Kubikmeter) erheblich geringer als die von Stahl (7850-7870 kg pro Kubikmeter), nämlich um das etwa 3,5-fache. Die Verwendung von Graphen beim Bau von Schaufeln für thermische Strömungsmaschinen bedeutet daher eine deutliche Stabilitätserhöhung bei gleichzeitiger erheblicher Gewichtsreduzierung.

Von Vorteil ist dabei auch, dass Graphen in im Wesentlichen zweidimensionalen Strukturen vorgelegt werden kann, das heißt in Form von Blättern, die bis zu einer Atom- bzw. Moleküldicke dünn sein können. Dies bedeutet auch, dass Graphenprodukte bei der Produktion von Schaufeln thermischer Strömungsmaschinen ohne Probleme genau in gewünschter Stärke verbaut werden können und auch an die Konturen des meist nicht regelmäßig geformten Schaufelblatts und/oder Schaufelfußes einfach und problemlos angeformt werden können.

Ist eine Schaufel einer thermischen Strömungsmaschine statt mit Faserverbundwerkstoffen in derselben Region mit Graphen ausgebildet, so ergibt sich außerdem eine erheblich verbesserte Schubübertragung, die mindestens gleich der von Metall ist.

Insbesondere ist die Verwendung von Graphen bei Schaufeln für solche thermische Strömungsmaschinen geeignet, in deren Betrieb potenziell mit dem Auftreffen von Störobjekten zu rechnen ist. Derartige Störobjekte sind als nicht gasförmige Körper zu bezeichnen, die auf die Schaufel auftreffen können.

Störobjekte sind daher beispielsweise bei einer Fan-Schaufel einer Flugzeugturbine Vögel, die bei Start oder Landung des Flugzeugs in die Turbine geraten (der sogenannte Vogelschlag). Ein besonderer Fokus der Erfindung liegt weiterhin darauf, Schaufeln gegen Störpartikel, also Störobjekte bis zu einer Größe von Wassertropfen, zu bewehren. Während nämlich beim Vogelschlag Kräfte als einmaliges Ereignis auf die Schaufel eines Strahltriebwerks einwirken, so ist das Auftreffen von solchen Störpartikeln, etwa in Dampfturbinen, fortwährend und mit Auftreffgeschwindigkeiten einiger 100 m/s und hat daher für die Dauerhaltbarkeit eine vergleichsweise noch größere Bedeutung. Dies gilt insbesondere deshalb, weil beim Betrieb von Dampfturbinen nochmals erheblich höhere Betriebskräfte auftreten als beim Betrieb von Strahltriebwerken. Die Erfindung ist daher besonders geeignet für Schaufeln von Dampfturbinen, d.h. für Niederdruckschaufeln.

Als Rotationsachse der Strömungsmaschine wird auch im Folgenden die Haupt-Rotationsachse definiert. Diese Haupt-Rotationsachse ist bestimmt durch die Einström- bzw. Ausströmrichtung des Fluids, das die Strömungsmaschine bewegt bzw. von der Strömungsmaschine bewegt wird. Die beiden Erstreckungen der Schaufel können zur Rotationsachse insofern in Bezug gesetzt werden, als die erste Erstreckung von der Rotationsachse winkelig, im Wesentlichen senkrecht, abgeht, nämlich radial verläuft. Auch die zweite Erstreckung verläuft quer zur Rotationsachse, ebenfalls bevorzugt im Wesentlichen rechtwinklig dazu, allerdings zugleich winkelig zur ersten Erstreckung. Die Erstreckungen müssen dabei beide nicht linear verlaufen, sondern können auch eine oder mehrere Krümmungen aufweisen. Dies bezieht sich insbesondere auf die zweite Erstreckung, da Schaufeln quer zur ersten (radialen) Erstreckung oftmals gekrümmt, verwunden und / oder gewellt sind. Es kann (durch Mittelung) eine lineare Haupterstreckungsrichtung der zweiten Erstreckung bestimmt werden, die einen definierten Winkel zur ersten Erstreckung ergibt, die zweite Erstreckung verläuft dann kurvenförmig entlang dieser linearen Haupterstreckungsrichtung.

Ein erfindungsgemäßes Verfahren der eingangs genannten Art zeichnet sich dadurch aus, dass die Schaufel lokalisiert in einem Innenbereich, abgewandt von einer Oberflächenregion mindestens bereichsweise mit Graphen ausgestattet wird.

Im Rahmen der Erfindung wird also Graphen zur Herstellung einer Schaufel für eine thermische Strömungsmaschine der oben genannten Art verwendet. Dabei kann, muss jedoch nicht, Graphen der Haupt-, ggf. sogar der alleinige Bestandteil der Schaufel sein. Wie viel Graphen in der Schaufel enthalten ist, ergibt sich im Wesentlichen aus einer Abwägung zwischen Gesichtspunkten des Designs der Schaufel, der zu erzielenden technischen Eigenschaften (Stabilität, Last, Gewicht u. v. m.) und der Kosten.

Zuletzt betrifft die Erfindung eine thermische Strömungsmaschine mit einer Rotationsachse, von der eine Anzahl von Schaufeln im Wesentlichen radial absteht. Dabei ist mindestens eine der Schaufeln gemäß der Erfindung ausgebildet.

Weitere besonders vorteilhafte Ausgestaltungen und Weiterbildungen der Erfindung ergeben sich auch aus den abhängigen Ansprüchen sowie der nachfolgenden Beschreibung. Dabei kann die Schaufel auch entsprechend den abhängigen Ansprüchen zum Verfahren weitergebildet sein und umgekehrt.

Gemäß einer ersten Weiterbildung der Erfindung umfasst das Schaufelblatt der Schaufel Graphen. Da es sich bei dem Schaufelblatt um einen besonders beanspruchten Bereich der Schaufel im Betrieb der Strömungsmaschine handelt, kann Graphen mit seinen optimalen Stabilitätseigenschaften insbesondere in diesem Bereich einen besonderen Zusatznutzen bieten. Im Bereich der Schaufel treten nämlich sowohl Strömungskräfte als auch dadurch hervorgerufene Biege- und Torsionsbeanspruchungen sowie Fliehkräfte auf, die das Schaufelblatt in verschiedenen Richtungen stark beanspruchen.

Alternativ oder ergänzend hierzu ist gemäß einer zweiten Weiterbildung der Erfindung vorgesehen, dass der Schaufelfuß Graphen umfasst. Am Schaufelfuß liegen nämlich ebenfalls hohe Kräfte beziehungsweise Spannungen an, da im Bereich des Schaufelfußes die Verbindung zur Rotationsachse, beispielsweise zu einer Rotorscheibe oder einer Rotorwelle, erfolgt. Die Kraftübertragung zwischen dem Schaufelfuß und einem Rotationselement, dessen Mittelpunkt die Rotationsachse definiert, bedingt daher ebenfalls lokal hohe Kräfte.

Insbesondere bevorzugt ist, dass sowohl der Schaufelfuß als auch das Schaufelblatt Graphen umfassen, wobei besonders bevorzugt eine Verbindung zwischen dem Schaufelfuß und dem Schaufelblatt auf Basis von durchgehenden Lagen und/oder Schichten und/oder Fasern vorhanden ist. Eine solche durchgehende Lage kann beispielsweise auch wiederum Graphen umfassen. Durch die Verbindung von Schaufelblatt und Schaufelfuß mittels durchgehender Elemente kann ein verstärkter Gesamtverbund zwischen den beiden geschaffen werden, wodurch sich Kräfte, die im Schaufelfuß auftreten, problemlos in das Schaufelblatt übertragen lassen bzw. umgekehrt.

Prinzipiell kann Graphen überall innerhalb der Schaufel lokalisiert sein, insbesondere aber erfindungsgemäß in einem Innenbereich, abgewandt von einer Oberflächenregion der Schaufel, um eine Art Kernstabilität der Schaufel zu gewährleisten. Zusätzlich kann die Schaufel Graphen in einer Oberflächenregion umfassen. Als Oberflächenregion wird dabei verstanden, dass sich die Region mindestens in unmittelbarer Nähe zur Oberfläche der Schaufel befindet, bevorzugt stellt die Oberflächenregion die äußerste Schicht der Schaufel, dass heißt die Oberfläche, dar. Es kann jedoch auch eine zusätzliche Schutzschicht oberhalb des Graphens in der Oberflächenregion aufgebracht sein, die zusätzliche technische und/oder ästhetische Effekte bewirken kann. Beispielsweise kann eine ein- oder mehrlagige Schutzbeschichtung und/oder Lackierung an der Oberfläche aufgebracht werden, so dass die Schutzbeschichtung bzw. Lackbeschichtung als Schutzschicht die eigentliche Oberfläche bildet, während die Oberflächenregion mindestens auch die unter der Lackschicht befindliche Schicht mit umfasst.

Die Lokalisierung von Graphen in einer Oberflächenregion bietet den Vorteil, dass es das Innere der Schaufel von eintreffenden mechanischen Einflüssen, beispielsweise durch Störobjekte, aufgrund seiner herausragenden Stabilitätsinsbesondere Härteeigenschaften abschirmt. Die Stabilität wird dann bevorzugt überwiegend durch das Graphen garantiert, wenigstens in den Bereichen, die aus einer Hauptbeanspruchungsrichtung gesehen unterhalb der durch das Graphen geschützten Oberflächenregion liegen.

Weiterhin entfaltet Graphen in der Oberflächenregion, welche in besonderem Maße zur Aufnahme und Übertragung von Biege- und Torsionsbeanspruchungen und zur Steifigkeit beiträgt, einen hohen Beitrag zur Festigkeit der Schaufel.

Das Graphen kann, auch wenn es nicht direkt in einer Oberflächenregion lokalisiert ist, einen vorgeformten Innenkörper umschließen. Ein solcher Innenkörper dient bei der Herstellung der Schaufel beispielsweise als Träger für weitere darauf anzubringende Schichten wie beispielsweise eine solche Graphenschicht und kann indirekt im Wesentlichen die Außenkontur der Schaufel bestimmen, vorausgesetzt, die weiteren Schichten sind näherungsweise überall gleich dick. Ein solcher Innenkörper kann wiederum auch aus Graphen ausgebildet sein, dies ist besonders dann bevorzugt, wenn sehr hohe Stabilitäten gefordert sind. Der Innenkörper kann jedoch auch aus anderen, beispielsweise instabileren Materialien wie Faserverbundwerkstoffen, Metallen, Gewebestrukturen, Leicht-Wabengittern, (insbesondere hochfesten) Schäumen o. Ä. ausgebildet sein. Dies bietet sich aus Kosten- und Materialeinsparungsgründen insbesondere dann an, wenn sich Schaufelquerschnitte ergeben, die eine komplett aus Graphen ausgebildete Schaufel nicht auslasten würden. Entscheidend ist im Endeffekt nur, dass die Kombination aus dem Innenkörper und den ihn umgebenden Schichten und die Anordnung der erforderlichen Tragquerschnitte zur Aufnahme von Kräften und Momenten, insbesondere Flieh-, Biege- und Torsionsbeanspruchungen, so erfolgt, dass die erforderliche Festigkeit der Schaufel gewährleistet ist.

Zur Herstellung einer Schaufel mit einem derartigen Innenkörper wird eine zweistufige Fertigungsmethode bevorzugt, bei der zunächst der Innenkörper ausgebildet das heißt geformt und ggf. erstarrt wird und sodann Außenlagen, beispielsweise Graphen-Außenlagen auf den Innenkörper aufgebracht werden. Solche Außenlagen können beispielsweise im Wesentlichen flache Materialien wie Fasern- und/oder Graphen-Blättchen umfassen.

Gemäß einer ersten Variante der Erfindung ist vorgesehen, dass das Graphen mindestens bereichsweise als homogener Formkörper vorliegt. Ein solch homogener Formkörper ergibt sich dann, wenn der Körper als dreidimensionales Objekt mithilfe chemischer und oder physikalischer Absonderungsbeziehungsweise Verbundbildungstechniken, beispielsweise Kristallbildungstechniken, hergestellt wird. Dies steht im Gegensatz zur Zusammenfügung von einzelnen Schichten, die als zweidimensionale Objekte übereinander geschichtet ein dreidimensionales Formkörperobjekt bilden können.

Eine zweite Variante der Erfindung, die ergänzend oder alternativ zur ersten Variante gewählt werden kann, sieht vor, dass das Graphen mindestens bereichsweise in Form von einer oder mehreren Lagen von schicht- und/oder blattartigen Graphenstrukturen vorliegt. Als schichtartige Graphenstruktur wird hier eine im Wesentlichen zweidimensionale Struktur definiert, die aus einer sehr geringen Anzahl von übereinandergelegten Kohlenstoffatomen besteht, das heißt sich im Wesentlichen in der Fläche erstreckt und nur eine Bauhöhe im Nanobereich aufweist. Dagegen sind blattartige Graphenstrukturen heute unter dem Titel Graphen-Papier bekannt und umfassen höhere Aufbauten, die gegebenenfalls unterstützt durch Verbindungsmechanismen abseits der chemischen Bindungen (d. h. Elektronenbindungen) gebildet sein können. Das Graphen-Papier kann daher beispielsweise durch Verkleben von schichtartigen Graphenstrukturen oder durch andere geeignete Verbindungsmittel hergestellt werden.

Beiden Graphenstrukturen ist gemein, dass ihre wesentliche Ausdehnung in der Fläche liegt, so dass die Herstellung einer dreidimensionalen Struktur im Bereich von mit dem Auge erkennbaren Dicken nur durch Übereinanderlegen mehrer solcher Schichten bzw. Blätter realisiert werden kann. Der Vorteil der Verwendung solcher schicht- beziehungsweise blattartigen Graphenstrukturen im Rahmen der Erfindung ist mannigfaltig:

Erstens kann damit gewährleistet werden, dass sehr sparsam mit dem wertvollen Material Graphen umgegangen wird und nur genau die Schichtdicken erzielt werden, die zur Herstellung einer gewissen gewünschten Stabilität notwendig sind.

Zweitens ist ein derart zweidimensional ausgelegtes Medium auch einfacher zu konfektionieren, insbesondere in Anbetracht der überragenden Härteeigenschaften des Graphens.

Drittens können unterschiedliche Stärken, d.h. Dicken des Graphens im Bereich der Schaufel dadurch realisiert werden, dass man lokal unterschiedlich viele Schichten der Graphenstruktur übereinander bringt.

Viertens ist die Herstellung von derartigen im Wesentlichen zweidimensionalen Graphenstrukturen derzeit erheblich einfacher als die Herstellung dreidimensionaler Formkörper wie
oben erwähnt.

Fünftens können schicht- bzw. blattartige Graphenstrukturen einfach durch Verbiegen bzw. durch permanentes Verformen in eine dreidimensionale, in sich jedoch flache Form gebracht werden. Sie können so problemlos an andere Bauteile angeformt werden. Dadurch lassen sich insbesondere Oberflächenverstärkungen einfach und kostengünstig mit Graphen herstellen.

Ein besonderer Effekt ergibt sich weiterhin, wenn die Graphenstrukturen mindestens bereichsweise durch Imprägnierung und/oder Verschmelzung und/oder Verklebung miteinander verbunden sind. Derartige Imprägnier- bzw. Verschmelzungsverfahren beinhalten insbesondere die Verfahren, die bei der Herstellung von Faserverbundwerkstoffen derzeit eingesetzt werden, beispielsweise unterstützt durch Vakuum und/oder durch Überdruck von außen, das heißt Einspritzverfahren oder ähnliche. Es wird hier also ein Harz, insbesondere ein Kunstharz, zwischen die einzelnen Lagen der Graphenstrukturen eingespritzt bzw. anderweitig eingebracht. Im Rahmen eines Verflüssigungs-, ggf. Vermischungs- und Reaktions- und darauf folgenden Vernetzungsprozesses wird der Verbund so stark, dass die einzelnen Graphenlagen (also Graphenschichten bzw. -blätter) miteinander fest verbunden sind.

Die Verwendung eines solchen Verfahrens bedingt auch, dass man mit seiner Hilfe relativ einfach Graphenlagen mit Faserverbundwerkstoffen zusammenbringen und verschmelzen kann. Es kann sich daraus also auch ein Mischverbund ergeben. Dabei ergibt sich einerseits aufgrund der niedrigen Massedichte von Graphen und der Fasern ein insgesamt sehr geringes Gewicht. Andererseits wird durch die Verwendung des Graphens eine bedeutend höhere Stabilität im Vergleich zu einfachen Faserverbundwerkstoffen erzielt. Die Erfindung machte sich in dieser speziellen Ausführungsform also zu Nutze, dass bekannte Verbindungstechniken, wie sie bereits in der Flugzeugtechnik verwendet werden, in Verbindung mit dem neuartigen Material Graphen besonders gewinnbringend angewandt werden können und sogar eine besonders vorteilhafte Kombination von verschiedenen Materialien, nämlich den bekannten Faserverbundwerkstoffen und dem Graphen, realisiert werden kann.

Das erfindungsgemäße Verfahren ist im Rahmen dieser speziellen Ausführungsform dadurch weitergebildet, dass das Graphen in Form von einer oder mehreren Lagen von schicht- und/oder blattartigen Graphenstrukturen vorgelegt wird, die mindestens bereichsweise durch Imprägnierung und/oder Verklebung miteinander verbunden werden. Dabei kann insbesondere das Graphen in eine Harzmatrix eingebettet vorgelegt werden, die in einem Imprägnier- und/oder Schmelzverfahren mindestens teilverflüssigt und mit Nachbarlagen verschmolzen wird. Mit anderen Worten kann das Graphen in hier in Form von sogenannten Prepregs als vorbeschichtetes Halbzeug vorgelegt werden, das dann in der Folge in einem Autoklavierprozess oder ähnlichem Verschmelzungsverfahren unter Hitze und/oder Druck mit anderen Bereichen der Schaufel verbunden wird.

Wie bereits erwähnt, kann bei der Verwendung von Graphenschichten bzw. -blättern eine Unterscheidung zwischen mehr oder weniger beanspruchten Bereichen der Schaufel getroffen werden. Dies geschieht insbesondere dadurch, dass in einem ersten Teilbereich eine Schichtung von mehr Graphenstrukturen vorliegt als in einem zweiten Teilbereich. Hierdurch entstehen Dickenvariationen des Graphenbereichs mit jeweils lokaler Ausprägung. So kann beispielsweise in solchen Bereichen, in denen eine besonders hohe Beanspruchung durch Störobjekte zu erwarten ist, ein verstärkter Graphenbereich angeordnet werden als in anderen Bereichen. Möglich ist auch die gezielte Anordnung von Graphen ausschließlich oder vorwiegend in den Bereichen, in denen die hohe Stabilität des Materials notwendig ist, während andere Bereiche auch komplett graphenfrei sein können bzw. mit einer reduzierten Graphenmenge versehen werden können.

Die Verwendung von blatt- bzw. schichtartigen Graphenstrukturen hat zudem den Vorteil, dass diese Strukturen unterschiedlich ausgerichtet werden können, um jeweils optimal Kraftangriffen entgegenzuwirken bzw. ihnen zu widerstehen. So ist es gemäß einer Variante bevorzugt, dass mindestens ein Teil der Graphenstrukturen im Wesentlichen parallel zueinander entlang einer Verlaufsfläche bzw. Verlaufsebene ausgerichtet sind. Besonders bevorzugt gilt dies für alle Graphenstrukturen, so dass sich eine komplette parallele Ausrichtung der Graphenstrukturen zueinander ergibt. Es ist dabei zu beachten, dass die Verlaufsfläche nicht zwangsläufig durch zwei Geraden definiert sein muss, sondern es kann sich auch um eine gekrümmte, verwundene und / oder gewellte Fläche handeln. Dies ist insbesondere beispielsweise dann der Fall, wenn die Fläche durch die Verlaufsform des Schaufelblatts definiert wird, da das Graphen dann zum Beispiel entlang eines solchen Verlaufs orientiert sein kann.

Besonders bevorzugt ist die Verlaufsfläche durch mindestens eine Erstreckung, bevorzugt durch beide Erstreckungen, der Schaufel definiert. Dies bedeutet, dass die Verlaufsfläche mit diesen Erstreckungen mindestens bereichsweise korrespondiert, das heißt beispielsweise im Wesentlichen parallel zu ihnen verläuft oder gemäß einer vorgegebenen Definition quer zu diesen Erstreckungen verläuft. Dies kann vorteilhafterweise immer in demselben Winkel zur jeweiligen Erstreckung erfolgen, besonders bevorzugt senkrecht zu dieser Erstreckung. Geht man davon aus, dass die Erstreckungsrichtungen gleichzeitig vorgeben, welche Richtungskräfte innerhalb des Schaufelblatts beziehungsweise der Schaufel verlaufen, so kann durch Ausrichtung der Graphenstrukturen in Orientierung an diesen Erstreckungsrichtungen jeweils ein optimaler Kraftübertragungs- und/oder Dämpfungseffekt erzielt werden. Die Stabilität der Schaufel wird durch die optimierte Ausrichtung der Graphenstrukturen optimiert.

In dem Falle, dass die Schaufel einen Formkörper im Inneren umfasst, kann es (wie gemäß einer zweiten Variante vorgesehen) sinnvoll sein, dass die Graphenstrukturen im Wesentlichen parallel zueinander U-förmig um einen Formkörper herum angeordnet sind bzw. so, dass sie der Außenkontur des Formkörpers folgen. Eine U-Form ist eine runde Verlaufsform mit einer Verlaufsrichtungsänderung um mindestens 90°, bevorzugt mindestens 120° und besonders bevorzugt 180° oder mehr. Ein solcher Verlauf ist bezogen auf mindestens eine Schnittebene der Schaufel, besonders bevorzugt eine Schnittebene, die parallel zur Rotationsachse der Strömungsmaschine liegt. Es wird also um den Formkörper herum eine blatt- bzw. schichtartige Graphenstruktur gelegt, die sich an die Form dieses Formkörpers anschmiegt und die dessen Form daher (bei erweitertem Umfang) widerspiegelt. Es ergibt sich daraus eine Bewehrung des Formkörpers überall dort, wo die blatt- bzw. schichtartige Graphenstruktur am Formkörper angebracht ist, ähnlich einem eng anliegenden Panzer einer Rüstung.

Eine solche Bewehrung eines Formkörpers ist insbesondere dann von Vorteil, wenn zu erwarten ist, dass aus einer bestimmten Richtung Störobjekte, insbesondere Kleinstobjekte wie Störpartikel (Tropfen o. Ä.) auf das Schaufelblatt auftreffen. Durch die abgerundete Form der Außenkontur des Blattes, entlang dessen Oberflächenregion die Graphenstrukturen aufgebracht sind, können derartige Störobjekte nicht in das Innere des Schaufelblatts eindringen. Somit ist das Innere der Schaufel effektiv vor lokalen Schäden und vor Alterung durch Abnutzung geschützt. Eine solche Anordnung erhöht damit fast zwangsläufig die Langlebigkeit des Schaufelblatts, da Abtragungseffekte vermieden werden und beispielsweise ein plötzliches Aufreißen des Schaufelblatts praktisch unmöglich gemacht wird.

Auch ist es möglich, die zuvor beschriebenen zwei Varianten der Ausrichtung der Graphenstrukturen zu kombinieren, etwa so, dass Graphenstrukturen im Inneren der Schaufel gemäß der ersten Variante ausgerichtet werden und um diesen so geformten inneren Formkörper Graphenstrukturen gemäß der zweiten Variante herumgelegt werden.

Ein besonderes Augenmerk im Rahmen der Erfindung wird darauf gerichtet, dass der Einfluss von Störobjekten auf die Schaufel möglichst reduziert wird. Es ist daher bevorzugt, dass das Graphen in Abhängigkeit von einer Belastungsrichtung der Schaufel durch auftreffende Partikel im Betrieb der Strömungsmaschine lokalisiert und/oder ausgerichtet und/oder in seiner Dicke verstärkt ist. Das Graphen wird also gerade dort angebracht, wo Störobjekte und/oder Materialflüsse erstmals am Schaufelblatt auftreffen, d.h. in Abhängigkeit von Erosionsangriffen bzw. -beanspruchungen. Entsprechend ist eine Ausrichtung des Graphens derart, dass gewährleistet wird, dass in Richtung der höchsten Beanspruchung der Schaufel durch Materialflüsse möglichst keine Strukturen vorliegen, in die diese Materialflüsse eindringen können. Ebenso ist es zusätzlich möglich, die Dicke des Graphens in diesen Bereichen der Erosionsangriffe zu verstärken um einem Abrieb und Alterungen möglichst effektiv vorbeugen zu können. Unter den Störobjekten werden insbesondere die oben erwähnten subsummiert, nämlich Vogelschlag, Sandpartikel, Tropfenschlag o. Ä. Materialströme umfassen insbesondere natürlich auch Prozessgasströme, die im normalen Betrieb der Strömungsmaschine anfallen: dies ist bei einer Gasturbine das Reaktionsgas, bei der Dampfturbine der Dampf und bei einer Flugzeugturbine die Umgebungsluft.

Insbesondere um den Einfluss von Störobjekten abzufangen, umfasst die Schaufel bevorzugt eine Schutzschicht an einer Außenhülle des Schaufelblatts. Je nach Art der zu erwartenden Störobjekte kann eine solche Schutzschicht ganz unterschiedliche Formen und Materialien umfassen. Sie kann beispielsweise so ausgebildet sein, dass größere Objekte wie zum Beispiel Vögel beim Aufprall auf dem Schaufelblatt keine größeren Schäden verursachen. Sie kann auch so ausgebildet sein, dass kleinere Partikel, insbesondere Tröpfchen, beim Betrieb einer Dampfturbine wirkungsvoll kompensiert werden. Die Schutzschicht ist also eine Art ein- oder mehrlagige Zusatzschicht der Schaufel, die neben den anderen Bestandteilen der Schaufel einen speziell auf den Einsatzzweck der Strömungsmaschine abgestellten Schutzzweck erfüllt.

Gemäß einer ersten Variante kann die Schutzschicht als folien- und/oder filmartiger Überzug realisiert sein. Es handelt sich also beispielsweise um ein Coating in Form eines Lacküberzugs und/oder um eine Folie, beispielsweise eine Metallfolie oder eine Kunststofffolie, die mindestens bereichsweise die Außenhülle des Schaufelblatts ausbildet. Die Schutzschicht kann wiederum auch Graphen umfassen, bevorzugt dann vollumfänglich aus Graphen ausgebildet sein.

Die Schutzschicht kann weiterhin als ein- oder mehrlagige Schutzbeschichtung ausgeführt werden, welche aus geeigneten Materialien gebildet wird, beispielsweise Kunststoffe, Metalle und / oder nichtmetallische Werkstoffe.

Eine andere Möglichkeit der Ausbildung einer Schutzschicht besteht darin, dass diese einen Formkörper, also eine Art Schutzleiste, umfasst, der mit anderen Bereichen der Schaufel durch Verbindungstechniken verbunden ist. Solche Verbindungstechniken umfassen im Speziellen das Kleben, Löten, Schweißen, aber auch das Imprägnieren, das An- bzw. Einklemmen, das Schrauben und das Nageln oder die Herstellung einer Bolzenverbindung, wobei diese Aufzählung nicht als vollständig angesehen werden muss. Durch die jeweilige Verbindungstechnik wird erreicht, dass der Formkörper möglichst fest mit den anderen Bereichen der Schaufel verbunden ist und dadurch nicht bei Auftreten von Störobjekten von den anderen Bereichen der Schaufel gelöst wird. Diese Verbindungstechnik dient weiterhin dazu, Kräfte, die auf den Formkörper wirken, durch die anderen Bereiche der Schaufel wirkungsvoll weiterleiten zu können. Es erfolgt also eine Kraftübertragung aufgrund eines Kraft- und/oder Formschlusses. Eine derartige Schutzschicht in Form eines Formkörpers ist insbesondere dann bevorzugt, wenn größere Störobjekte, d.h. mindestens in Tropfengröße oder noch erheblich größer, zu erwarten sind. Der Formkörper kann aus Graphen, jedoch auch aus einem Metall oder aus anderen nichtmetallischen Materialien ausgebildet sein.

Wie bereits erwähnt, ist es von besonderem Vorteil, wenn der Schaufelfuß und das Schaufelblatt besonders gut miteinander verbunden sind, so dass sie einen stabilen Gesamtaufbau ergeben. In diesem Zusammenhang wird bevorzugt, dass der Schaufelfuß und das Schaufelblatt mindestens in einem Übergangsbereich übereinander gelegte und miteinander verbundene Schichtlagen aufweisen, die sich mindestens teilweise über den Übergangsbereich hinweg erstrecken. Solche Schichtlagen müssen nicht zwangsweise Graphenlagen in Form von blatt- bzw. schichtartigen Graphenstrukturen sein, wobei dies bevorzugt ist. Als Schichtlagen können beispielsweise auch Faserlagen verwendet werden, so auch miteinander verbundene mehrschichtige Faserlagen. Insgesamt wird durch die durchgängige, über den Übergangsbereich hinausgehende Erstreckung der Schichtlagen eine höhere Stabilität der Schaufel in sich als Ganzes erzeugt, wobei bei Verwendung von Schichtlagen aus Graphen (teilweise oder vollständig) diese Stabilität naturgemäß wie oben beschrieben besonders effektiv erhöht.

Was den Schaufelfuß der erfindungsgemäßen Schaufel angeht, so wird bevorzugt, dass er Kontaktflächen zu einem Rotor bzw. einem Gehäuse der thermischen Strömungsmaschine ausbildet. Dies kann beispielsweise durch eine entsprechende Formgebung erreicht werden, insbesondere von Graphenlagen im Fuß, die aufgrund ihrer hohen Festigkeit und Härte sehr gute Kontakteigenschaften aufweisen. Zusätzlich können auch weitere Materialien in den Fuß eingebracht werden, beispielsweise Metall zum Bereitstellen eines kompatiblen Kontakts und zur Sicherstellung von Fertigungstoleranzen und/oder verformbare bzw. während des Verbaus verformte Materialien zum Toleranzausgleich - etwa Gummi oder Thermoplaste.

Bevorzugt umfasst der Schaufelfuß zur Anbringung an einer Rotationsachse bzw. eines Rotationselements, also beispielsweise eine Rotorscheibe oder Rotorwelle, Bohrungen und/oder Einbuchtungen in seiner Außenkontur und weist im Bereich der Bohrungen und/oder der Einbuchtungen mindestens eine Materialverstärkung auf, die als Kontaktverstärkung und/oder als Reibungsfläche für lokale Verbindungen zur Rotationsachse ausgebildet ist. Derartige Materialverstärkungen können beispielsweise aus Metall, etwa als Metallauflagen, und/oder aus Kunststoff(auflagen), jedoch auch wieder als Graphenverstärkungen realisiert sein. Mithilfe dieser Materialverstärkungen ist es möglich, den Kontakt zwischen der Rotationsachse und der Schaufel stabil zu halten und/oder Reibungsverschleiß bzw. Beschädigungen durch Reibung vorzubeugen. Die Bohrungen bzw. Einbuchtungen können beispielsweise so realisiert sein, wie sie derzeit bei sogenannten Steckfüßen oder bei Tannenbaumfüßen von Schaufeln realisiert werden.

Zur Herstellung der erfindungsgemäßen Schaufel hat sich als besonders effektiv erwiesen, die Schaufel, inbesondere das Schaufelblatt, aus einer Anzahl vorgeformter Einzelteile zusammenzusetzen, wobei mindestens eines der Einzelteile Graphen umfasst und/oder mit Graphen ausgestattet wird. So kann beispielsweise zwischen einer Eintritts- bzw. Einströmseite und einer Austritts- bzw. Abströmseite des Schaufelblatts unterschieden werden. Die Austrittsseite ist derjenige Bereich, der dem Materialstrom abgewandt ist, während die Eintrittsseite derjenige ist, der im Materialstrom liegt. Naturgemäß ist der Eintrittsseitenbereich dadurch stärker von Erosionsangriffen beansprucht. Dies bedeutet auch, dass im Speziellen der Eintrittsseitenbereich bevorzugt mit Graphen ausgestattet wird. Es kann jedoch auch (im Speziellen zusätzlich) von Nutzen sein, den Austrittsseitenbereich ganz oder teilweise mit Graphen auszubilden, beispielsweise für den Schutz vor Materialflüssen bei Umkehrströmungen oder Schwachlastzuständen. Dies ist im Wesentlichen abhängig von der Art der Strömungsmaschine, der Ausgestaltung der Schaufel, insbesondere der geometrischen Ausgestaltung der Schaufel, den Betriebstemperaturen, der Art des Materialstroms, den Druckverhältnisse in der Strömungsmaschine und vielem mehr.

Selbstverständlich sind auch andere Unterteilungen einer Schaufel möglich, beispielsweise die Teilung zwischen dem Schaufelblatt und dem Schaufelfuß, eine Unterteilung zwischen einem Innenformkörper und der Außenhülle der Schaufel und vieles mehr, wobei auch mehr als nur zwei Einzelteile zusammengefügt werden können. So kann beispielsweise das Schaufelblatt separat ausgebildet und später mit dem Schaufelfuß zusammengeführt werden, wobei auch sowohl das Schaufelblatt als auch der Schaufelfuß jeweils aus mehreren Einzelteilen bestehen können, die vor der Zusammenführung der beiden Elemente Schaufelfuß und Schaufelblatt jeweils in sich zunächst gefügt wurden.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Es zeigen:
Figur 1 eine perspektivische Ansicht einer ersten Gestaltungsform einer erfindungsgemäßen Schaufel,
Figur 2 eine Schnittansicht entlang einer Schnittlinie II - II aus Figur 1,
Figur 3 eine Detailansicht der Schnittansicht aus Figur 2 zur Darstellung einer ersten bevorzugten Ausführungsform der Erfindung,
Figur 4 eine Detailansicht der Schnittansicht aus Figur 2 zur Darstellung einer zweiten bevorzugten Ausführungsform der Erfindung,
Figur 5 eine Detailansicht der Schnittansicht aus Figur 2 zur Darstellung einer dritten bevorzugten Ausführungsform der Erfindung,
Figur 6 eine Detailansicht der Schnittansicht aus Figur 2 zur Darstellung einer vierten bevorzugten Ausführungsform der Erfindung,
Figur 7 eine Detailansicht der Schnittansicht aus Figur 2 zur Darstellung einer fünften bevorzugten Ausführungsform der Erfindung,
Figur 8 eine Detailansicht der Schnittansicht aus Figur 2 zur Darstellung einer sechsten bevorzugten Ausführungsform der Erfindung,
Figur 9 eine Detailansicht der Schnittansicht aus Figur 2 zur Darstellung einer siebten bevorzugten Ausführungsform der Erfindung,
Figur 10 eine Frontansicht einer zweiten Gestaltungsform einer erfindungsgemäßen Schaufel,
Figur 11 eine Schnittansicht entlang einer Schnittlinie XI - XI aus Figur 10,
Figur 12 eine Detailansicht des Schaufelfußes der Schaufel aus Figur 10,
Figur 13 eine Frontansicht einer dritten Gestaltungsform einer erfindungsgemäßen Schaufel,
Figur 14 eine Schnittansicht entlang einer Schnittlinie XIV - XIV aus Figur 13.

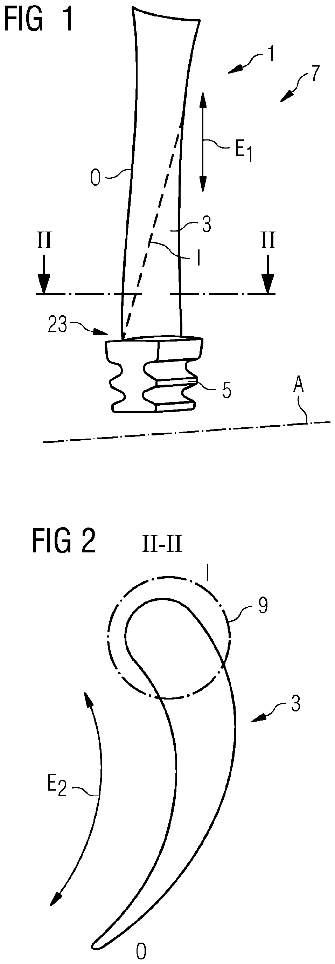

Figur 1 und 2 zeigen eine Schaufel 1 einer thermischen Strömungsmaschine 7, die um eine Haupt-Rotationsachse A der Strömungsmaschine 7 rotierbar angebracht wird. Sie weist ein Schaufelblatt 3 und einen Schaufelfuß 5 auf. Der Schaufelfuß 5 wird fest mit einem Rotationselement verbunden, das die Rotationsachse A definiert. Die Art der Verbindung und die Art des Rotationselements sind nicht näher dargestellt. Beispielsweise ist es möglich, den Schaufelfuß 5 mit einer Rotorscheibe zu verbinden, andere Rotationselemente können beispielsweise als Rotorwellen ausgebildet sein. Eine Rotorscheibe kann auch so ausgebildet sein, dass sie innerhalb eines runden Gehäuses rotierbar angeordnet und gelagert ist und einen Kreis definiert, innerhalb dessen die Schaufeln angeordnet sind. Die Rotationsachse A ist in diesem Fall nicht physisch manifestiert, sondern durch die geometrische Anordnung der Rotorscheibe und der Schaufeln definiert. Mit anderen Worten rotiert die Rotorscheibe dann um die Rotationsachse A, ohne selbst in der Rotationsachse A angeordnet zu sein.

Das Schaufelblatt 3 steht in einer ersten Erstreckung E₁ im Wesentlichen senkrecht von der Haupt-Rotationsachse A ab. Es weist in seinem Querschnitt (vgl. Figur 2) einen abgerundeten Vorderbereich 9 auf, der im Betrieb der Strömungsmaschine der Einströmseite I entspricht. Von der Vorderseite 9 in Richtung der der Einströmseite I abgewandten Abströmseite O, d. h. in einer zweiten Erstreckung E₂, ist das Schaufelblatt 3 bogenförmig und spitzt sich langsam zu. Der abgerundete Vorderbereich 9 ist die Region des Schaufelblattes 3, in der ein Materialstrom, das heißt das Fluidum, das durch die thermische Strömungsmaschine 7 hindurchgeführt wird, erstmals auftrifft. Dies bedeutet, dass in diesem Bereich ein Erosionsangriff durch das Fluidum bzw. durch vom Fluidum mit transportierte Störobjekte erfolgt. Solche Störobjekte sind neben relativ selten anfallenden größeren Objekten in erster Linie Störpartikel, beispielsweise Tropfen beim Betrieb einer Dampfturbine als Strömungsmaschine 7. Größere Objekte fallen in erster Linie im Freiluftbetrieb von Strömungsmaschinen an, beispielsweise der bereits erwähnte Vogelschlag bei Strahltriebwerken. Der Erosionsangriff kann je nach Einsatzfall und Betriebszustand aus unterschiedlichen Richtungen einwirken, z. B. unter einem Winkel zur Kante der Einströmseite I, oder auch unter einem Winkel zur Kante der Abströmseite O.

In dem Vorderbereich 9 können also Störobjekte auftreffen, die eine besondere Herausforderung für die Stabilität der Schaufel 1 darstellen. In Figur 1 ist weiterhin zu erkennen, dass das Schaufelblatt 3 entlang der ersten Erstreckung E₁ eine in sich gewundene Form aufweist, so dass der Vorderbereich 9 auf der Ebene des Schnittes II - II in Figur 1 nach hinten links weist und dann nach oben hin in einer Linksdrehung gewunden ist und am oberen Blattbereich nach hinten rechts gewandt. Das Ende des Schaufelblatts 3, das der Abströmseite 0 zuzuordnen ist, ist im unteren Blattbereich nach vorn links gerichtet und behält diese Ausrichtung abgesehen von einer gewissen Winkeländerung praktisch bei. Daraus ergibt sich, dass sich nicht über alle Schnittebenen parallel zum Schnitt II - II derselbe prinzipielle Grundriss wie in Figur 2 ergibt. Vielmehr ist bei einem parallelen Schnitt in einem oberen Bereich des Schaufelblatts 3 in Figur 1 eine andere Wölbung und Ausrichtung des Schaufelblatts zu verzeichnen als die, die in Figur 2 erkennbar ist.

Das Prinzip der Erfindung besteht nun allgemein darin, dass die Schaufel 1 so ausgebildet ist, dass sie Graphen umfasst. Hierdurch erhöht sich die Stabilität der Schaufel 1 erheblich, insbesondere ihre Fliehkraft-, Biege- und Torsionsstabilität, vor allem des Schaufelblatts 3, da das Graphen aufgrund seiner zweidimensional sehr stabilen Eigenschaften (d.h. es ist in zwei Hauptrichtungen sehr stabil) in Richtung beider Erstreckungen E₁, E₂ sehr effektiv Kräfte kompensieren kann. Graphen kann jedoch im Schaufelfuß 5 enthalten sein. Bevorzugt ist zudem Graphen auch in einem Übergangsbereich 23 zwischen dem Schaufelblatt 3 und dem Schaufelfuß 5 enthalten, so dass der Schaufelfuß 5 und das Schaufelblatt 3 besonders fest und stabil miteinander verbunden sind. Neben der Stabilisierung der Schaufel 1 dient das Graphen auch dazu, eine Gewichtsreduzierung der Schaufel 1 im Vergleich zu ausschließlich aus Metall geformten Schaufeln zu ermöglichen. Dies ergibt sich aus der deutlich geringeren Massedichte von Graphen im Vergleich zu Metallen beziehungsweise zu Metalllegierungen.

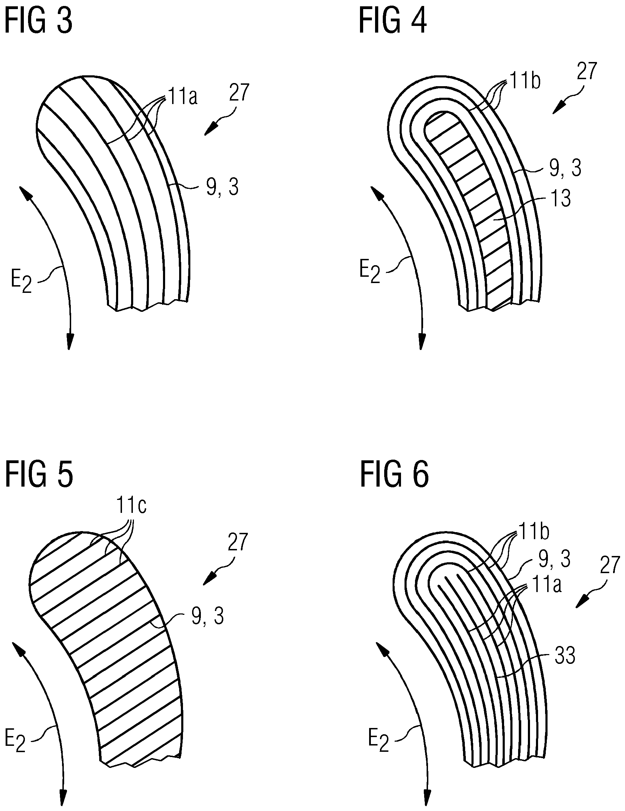

Figur 3 zeigt den Vorderbereich 9 gemäß einer ersten Ausführungsform der Erfindung. Hier ist das Graphen in Form einer blattartigen Graphenstruktur 11a in das Schaufelblatt 3 eingearbeitet, die der Blattkontur des Schaufelblatts 3 folgt. Es wurde dabei an der zweiten Erstreckung E₂ ausgerichtet. Dies bedeutet in diesem Fall, dass es im Wesentlichen parallel zur zweiten Erstreckung E₂ und auch (in der vorliegenden Figur nicht erkennbar) parallel zur ersten Erstreckung E₁ ausgerichtet ist. Die einzelnen Graphenstrukturen 11a liegen daher im Wesentlichen parallel zueinander und sind mithilfe eines Imprägnierverfahrens miteinander in eine feste Verbindung gebracht. Auch die Oberflächenregion 27 des Vorderbereichs 9 umfasst Graphen.

Figur 4 zeigt den Vorderbereich 9 im Rahmen einer zweiten Ausführungsform der Erfindung, die alternativ zur ersten Ausführungsform gewählt werden kann. Hier ist das Schaufelblatt 3 im Vorderbereich 9 mit einem Innenformkörper 13 ausgestattet, der hier als Metallkern ausgebildet ist. Der Innenformkörper 13 ist damit eine Art Abstandshalter oder Abstandselement vom Inneren der Schaufel 1 zur Oberflächenregion 27. Neben Metall kann er beispielsweise auch ein Gewebe und/oder ein Leichtwabengitter und/oder einen Schaum, insbesondere einen hochfesten Schaum, umfassen. Auch Kombinationen dieser oder anderer Materialien sind je nach Anwendungsgebiet der Schaufel 1 möglich. Der Innenformkörper 13 kann insbesondere auch Graphen umfassen. Um den Innenformkörper 13 herum sind wiederum mehrere Lagen einer U-förmig um den Umriss des Innenformkörpers 13 angeordneten Graphenstruktur 11b aufgebaut, die damit die Oberflächenregion 27 umfassen. Mit anderen Worten: Die Oberflächenregion 27 ist hier vollständig von Graphenstrukturen 11b definiert, die um die Blattkontur des Schaufelblatts 3 herum gelegt, d.h. angeordnet sind.

Figur 5 zeigt den Vorderbereich 9 im Rahmen einer dritten Ausführungsform der Erfindung. Auch diese Ausführungsform kann alternativ zu den beiden vorhergehenden Ausführungsformen verstanden werden. Ähnlich wie in Figur 3 gezeigt, umfasst auch hier der Vorderbereich 9 blattartige Graphenstrukturen 11c, die im vorliegenden Fall allerdings im Wesentlichen senkrecht zur zweiten Erstreckung E₂, d.h. quer zur Blattkontur des Schaufelblatts 3, ausgerichtet sind. Hierdurch kann vermieden werden, dass, im Gegensatz zum ersten Ausführungsbeispiel gemäß Figur 3, Partikel, die entlang der zweiten Erstreckung E₂ auf das Schaufelblatt 3 auftreffen, in das Innere des Schaufelblatts 3 eindringen können. Hierzu bilden die Graphenstrukturen 11c aufgrund ihrer quer zum Erosionsangriff ausgelegten Ausrichtung eine Fläche aus. Dagegen würden Partikel bei der ersten Ausführungsform gemäß Figur 3 genau dort auf dem Schaufelblatt 3 auftreffen, wo sich die Stöße der einzelnen blattartigen Graphenstrukturen 11a befinden, und dadurch leichter in das Innere der Schaufel 1 eindringen können.

Figur 6 zeigt eine vierte Ausführungsform der Erfindung, die als eine Art Kombination zwischen der ersten und der zweiten Ausführungsform gemäß den Figuren 3 und 4 bezeichnet werden könnte. Einerseits ist hier ein innerer Formkörper 33 gebildet, der in seiner Form an den Innenformkörper 13 aus Figur 4 erinnert. Dieser innere Formkörper 33 ist allerdings aus blattartigen Graphenstrukturen 11a gebildet, die analog zu denen in Figur 3 ausgerichtet sind. Um zu verhindern, dass Partikel genau auf den Stoß der blattartigen Graphenstrukturen 11a auftreffen und diese gegebenenfalls voneinander spalten, ist - wie in Figur 4 gezeigt - auch in der vorliegenden Ausführungsform eine U-förmige Graphenstruktur 11b um den inneren Formkörper 33 herum aufgebaut. Wiederum ist die Oberflächenregion 27 somit aus Graphen ausgebildet.

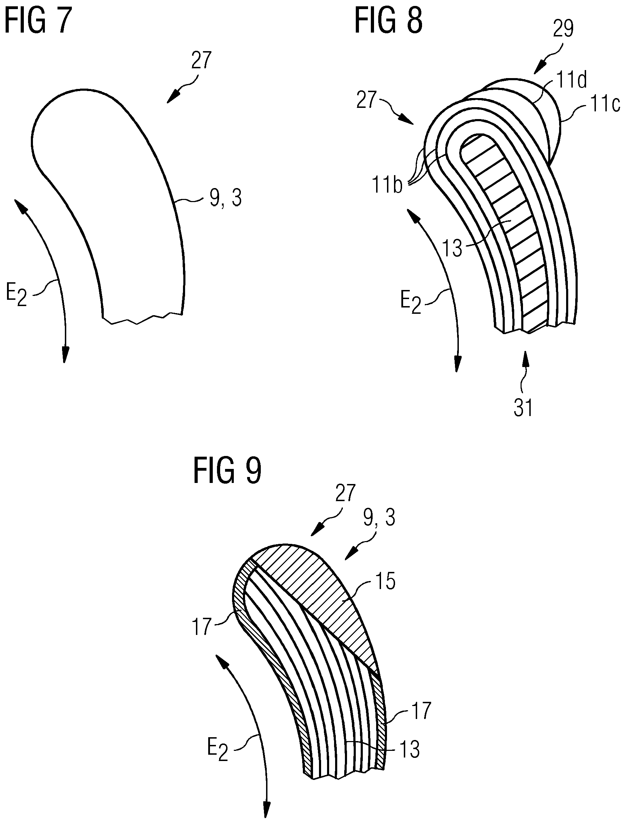

Figur 7 zeigt eine fünfte Ausführungsform der Erfindung, wiederum in Bezug auf den Vorderbereich 9 des Schaufelblatts 3. Hier ist das gesamte Schaufelblatt 3 einstückig und homogen aus Graphen ausgebildet. Im Gegensatz zu einem Mehrschicht- bzw. Mehrlagenaufbau aus zusammengefügten einzelnen Blatt- bzw. Schichtstrukturen, wie in den vorherigen Ausführungsbeispiel gezeigt, ist hier also ein dreidimensionaler Formkörper vollständig aus Graphen ausgebildet vorgelegt. Es darf im Rahmen der hier vorliegenden Ausführungsform nicht unerwähnt bleiben, dass ein solcher Formkörper aus Graphen auch mehrere miteinander verbundene Formkörper umfassen kann, von denen nicht zwangsläufig alle Graphen umfassen müssen. Beispielsweise kann im Inneren der Schaufel wiederum ein Innenformkörper 13 wie in Figur 4 gezeigt angeordnet sein.

Figur 8 zeigt eine sechste Ausführungsform eines erfindungsgemäßen Schaufelblatts 3 bzw. dessen Vorderbereich 9. Analog zur in Figur 4 gezeigten Ausführungsform sind auch hier um einen Innenformkörper 13 herum mehrere blattartige Graphenstrukturen 11 b in einer Art U-Form aufgebaut. In einem ersten Teilbereich 29 sind noch zusätzliche blattartige Graphenstrukturen 11d, 11e zugefügt, so dass im Vergleich zu einem zweiten Teilbereich 31, in dem nur drei blattartige Graphenstrukturen 11b vorliegen, in diesem ersten Teilbereich 29 insgesamt fünf blattartige Graphenstrukturen 11b (3fach), 11d, 11e vorliegen. Dies bedeutet, dass in dem ersten Teilbereich 29, in dem ein Erosionsangriff erwartet wird, eine Verstärkung der Graphenlagen erfolgt, so dass wiederum ein erhöhter Schutz vor eintreffenden Störobjekten erzielt werden kann.

Ein ähnliches Ziel verfolgt auch die siebte Ausführungsform, die anhand von Figur 9 näher erläutert wird. Hier wird ein Innenformkörper 13 in Form eines Graphenkörpers 13 vorgelegt, der mit Schutzschichten 15, 17 an der Oberflächenregion 27 der Schaufel 1 versehen wird. Bei einer ersten Schutzschicht 17 handelt es sich um einen Kunststoffüberzug; es könnte jedoch auch eine Metallfolie oder eine Graphenschicht vorgesehen sein. Weiterhin kann ein mehrschichtiges Schutzsystem vorgesehen sein, welches aus mehreren Lagen aufgebaut ist. Die weiter oben im Bereich eines Erosionsangriffs angeordnete Schutzschicht 15 ist eine Schutzleiste 15, das heißt ein Formkörper 15, hier aus Titan. Möglich ist jedoch auch eine andere Materialwahl, beispielsweise wiederum Graphen oder Stellit.

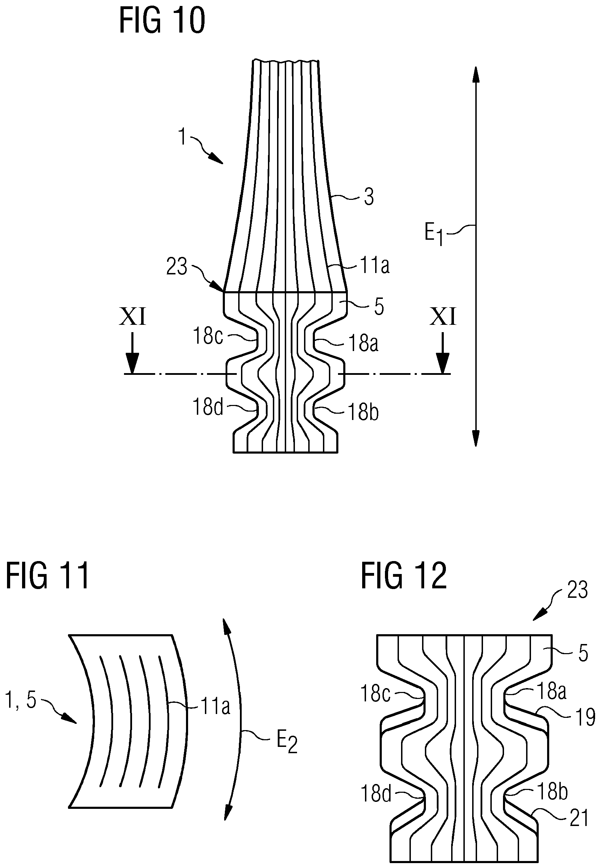

Figur 10 zeigt eine Gestaltung einer erfindungsgemäßen Schaufel 1, die in der Form im Wesentlichen der Form der in Figur 1 gezeigten Schaufel entspricht und insbesondere, wie auch die letztere, einen sogenannten Tannenbaumfuß 5 aufweist, der mit einem Schaufelblatt 3 über einen Übergangsbereich 23 verbunden ist. Die Schaufel 1 ist wiederum Teil einer thermischen Strömungsmaschine 7. Im Wesentlichen entlang einer ersten Erstreckung E₁ orientiert sind mehrere miteinander verbundene blattartige Graphenstrukturen 11a, die sich vom Schaufelfuß 5 hinein in das Schaufelblatt 3 durchziehen und miteinander mithilfe eines Harzimprägnierverfahrens verbunden sind. Figur 11 zeigt einen Querschnitt des Fußes entlang einer Schnittlinie XI - XI, in dem erkennbar ist, dass die Graphenstrukturen 11a auch entlang der zweiten Erstreckung E₂ der Schaufel 1 ausgerichtet sind. Mit anderen Worten, die durch die beiden Erstreckungen E₁ und E₂ definierte Fläche dient als Ausrichtung für die einzelnen blattartigen Graphenstrukturen 11a, entlang derer diese im Wesentlichen parallel angeordnet sind.

Figur 12 zeigt ein Detail des Schaufelfußes 5 aus den beiden vorhergehenden Figuren. Nach Art des Tannenbaumfußes weist er beidseitig jeweils zwei Einbuchtungen 18a, 18b, 18c, 18d auf. In der in Figur 12 oberen rechten Einbuchtung 18a ist eine Metallauflage 19 ausgebildet, nämlich auf der Oberseite einer nasenartigen Ausbuchtung, die das untere Ende der oberen Einbuchtung 18a darstellt. Analog dazu ist bei der rechten unteren Einbuchtung 18b in einem analogen oberen Bereich einer zweiten nasenartigen Ausbuchtung eine thermoplastische Auflage 21 ausgeführt. Während die Metallauflage 19 im Wesentlichen der Stabilisierung der Verbindung zur Rotationsachse (nicht dargestellt) dient, ist die Thermoplast-Auflage 21 eine Reibungsauflage für die Anbindung an dieselbe Rotationsachse. In der oberen linken Einbuchtung 18c und der unteren linken Einbuchtung 18d sind in analoger Weise eine Metallauflage bzw. eine Thermoplast-Auflage ausführbar.

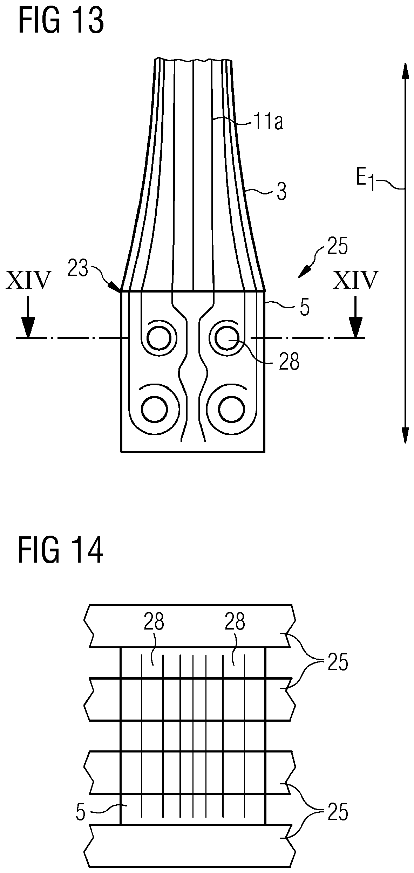

Die Figuren 13 und 14 zeigen eine weitere Gestaltungsform einer erfindungsgemäßen Schaufel 1, bei der der Schaufelfuß 5 als Steckfuß 5 realisiert ist. Mit dargestellt ist eine Rotorscheibe 25, deren Verlauf insbesondere in der Schnittdarstellung in Figur 14 erkennbar wird. Zwischen jeweils zwei Teilbereichen der Rotorscheibe 25 wird ein Schaufelfuß 5 einer erfindungsgemäßen Schaufel 1 eingebracht. Die Verbindung zwischen den jeweiligen Schaufelfüßen 5 und der Rotorscheibe 25 erfolgt über Bolzen, die in Bohrungen 28 durchgeführt werden, die sowohl im jeweiligen Schaufelfuß 5 als auch in der Rotorscheibe 25 eingefügt sind. Die Lagen dieser Bohrungen korrespondieren miteinander so, dass sie miteinander in einem bestimmungsgemäßen Montagezustand in Deckung zu bringen sind. Analog zur den Darstellungen aus Figur 10 bis Figur 12 sind auch hier blattartige Graphenstrukturen 11a miteinander verbunden und ausgerichtet.

Es wird abschließend noch einmal darauf hingewiesen, dass es sich bei den vorhergehend detailliert beschriebenen Komponenten der Schaufel bzw. der thermischen Strömungsmaschine lediglich um Ausführungsbeispiele handelt, welche vom Fachmann in verschiedenster Weise modifiziert werden können, ohne den Bereich der Erfindung zu verlassen. Weiterhin schließt die Verwendung der unbestimmten Artikel "ein" bzw. "eine" nicht aus, dass die betreffenden Merkmale auch mehrfach vorhanden sein können. Außerdem können "Einheiten" aus einer oder mehreren, auch räumlich verteilt angeordneten, Komponenten bestehen.

## Patentansprüche

1. Schaufel (1) für eine thermische Strömungsmaschine (7), umfassend ein Schaufelblatt (3) mit einer ersten Erstreckung (E₁) in im Wesentlichen radialer Ausrichtung in Bezug auf eine Rotationsachse (A) der Strömungsmaschine (7) und einer quer zur ersten Erstreckung ausgebildeten zweiten Erstreckung (E₂) sowie einen an das Schaufelblatt (3) anschließenden Schaufelfuß (5), der das Schaufelblatt (3) in der ersten Erstreckung (E₁) abschließt, **dadurch gekennzeichnet, dass** die Schaufel, lokalisiert in einem Innenbereich, abgewandt von einer Oberflächenregion (27), um eine Art Kernstabilität der Schaufel zu gewährleisten, mindestens bereichsweise Graphen umfasst.

2. Schaufel gemäß Anspruch 1, **dadurch gekennzeichnet, dass** das Graphen einen vorgeformten Innenkörper (13, 33) umschließt.

3. Schaufel gemäß einem der vorhergehenden Ansprüche, **dadurch gekennzeichnet, dass** das Graphen mindestens bereichsweise als homogener Formkörper (13) vorliegt.

4. Schaufel gemäß einem der vorhergehenden Ansprüche, **dadurch gekennzeichnet, dass** das Graphen mindestens bereichsweise in Form von einer oder mehreren Lagen von schicht- und/oder blattartigen Graphenstrukturen (11a, 11b, 11c, 11d, 11e) vorliegt.

5. Schaufel gemäß Anspruch 4, **dadurch gekennzeichnet, dass** die Graphenstrukturen (11a, 11b, 11c, 11d, 11e) mindestens bereichsweise durch Imprägnierung und/oder Verschmelzung und/oder Verklebung miteinander verbunden sind.

6. Schaufel gemäß Anspruch 4 oder 5, **dadurch gekennzeichnet, dass** mindestens ein Teil der Graphenstrukturen (11a, 11b, 11c, 11d, 11e) im Wesentlichen parallel zueinander entlang einer Verlaufsfläche ausgerichtet sind.

7. Schaufel gemäß einem der Ansprüche 4 bis 6, **dadurch gekennzeichnet, dass** die Graphenstrukturen (11a, 11b, 11c, 11d, 11e) im Wesentlichen parallel zueinander um einen Formkörper (13, 33) herum so angeordnet sind, dass sie der Außenkontur des Formkörpers (13, 33) folgen.

8. Schaufel gemäß einem der vorhergehenden Ansprüche, **dadurch gekennzeichnet, dass** das Graphen in Abhängigkeit von einer Belastungsrichtung der Schaufel durch auftreffende Partikel im Betrieb der Strömungsmaschine (7) lokalisiert und/oder ausgerichtet und/oder in seiner Dicke verstärkt ist.

9. Schaufel gemäß einem der vorhergehenden Ansprüche, **dadurch gekennzeichnet, dass** sie eine Schutzschicht (15, 17) an einer Außenhülle des Schaufelblatts (3) umfasst.

10. Schaufel gemäß Anspruch 9, **dadurch gekennzeichnet, dass** die Schutzschicht einen Formkörper (19) umfasst, der mit anderen Bereichen der Schaufel durch Verbindungstechniken verbunden ist.

11. Schaufel gemäß einem der vorhergehenden Ansprüche, **dadurch gekennzeichnet, dass** der Schaufelfuß (5) und das Schaufelblatt (3) mindestens in einem Übergangsbereich (23) übereinander gelegte und miteinander verbundene Schichtlagen (11a) aufweisen, die sich mindestens teilweise über den Übergangsbereich (23) hinweg erstrecken.

12. Thermische Strömungsmaschine (7), mit einer Rotationsachse (A), von der eine Anzahl von Schaufeln (1) im Wesentlichen radial absteht, **dadurch gekennzeichnet, dass** mindestens eine der Schaufeln (1) gemäß einem der Ansprüche 1 bis 11 ausgebildet ist.

13. Verfahren zur Herstellung einer Schaufel (1) für eine thermische Strömungsmaschine (7), umfassend ein Schaufelblatt (3) mit einer ersten Erstreckung (E₁) in im Wesentlichen radialer Ausrichtung in Bezug auf eine Rotationsachse (A) der Strömungsmaschine (7) und einer quer zur ersten Erstreckung (E₁) ausgebildeten zweiten Erstreckung (E₂) sowie einen an das Schaufelblatt (3) anschließenden Schaufelfuß (5), der das Schaufelblatt (3) in der ersten Erstreckung (E₁) abschließt, **dadurch gekennzeichnet, dass** die Schaufel (1), lokalisiert in einem Innenbereich, abgewandt von einer Oberflächenregion (27), um eine Art Kernstabilität der Schaufel zu gewährleisten, mindestens bereichsweise mit Graphen ausgestattet wird.

14. Verfahren gemäß Anspruch 13, **dadurch gekennzeichnet, dass** die Schaufel (1) aus einer Anzahl vorgeformter Einzelteile (13, 15) zusammengesetzt wird, wobei mindestens eines der Einzelteile Graphen umfasst und/oder mit Graphen ausgestattet wird.

## Claims

1. Blade (1) for a thermal turbomachine (7), comprising a blade airfoil (3) with a first extent (E₁) in a substantially radial orientation in relation to a rotational axis (A) of the turbomachine (7) and a second extent (E₂), which is formed transversely to the first extent, and comprising a blade root (5), which adjoins the blade airfoil (3) and terminates the blade airfoil (3) in the first extent (E₁), **characterized in that** the blade comprises graphene at least in some region or regions in a localized manner in an inner region, away from a surface region (27), in order to ensure a kind of core stability of the blade.

2. Blade according to Claim 1, **characterized in that** the graphene encloses a preshaped inner body (13, 33).

3. Blade according to one of the preceding claims, **characterized in that** the graphene is in the form of a homogeneous shaped body (13), at least in some region or regions.

4. Blade according to one of the preceding claims, **characterized in that** the graphene is in the form of one or more plies of layer-type and/or sheet-type graphene structures (11a, 11b, 11c, 11d, 11e), at least in some region or regions.

5. Blade according to Claim 4, **characterized in that** the graphene structures (11a, 11b, 11c, 11d, 11e) are connected to one another at least in some region or regions by impregnation and/or fusion and/or adhesive bonding.

6. Blade according to Claim 4 or 5, **characterized in that** at least some of the graphene structures (11a, 11b, 11c, 11d, 11e) are aligned substantially parallel to one another along a profile surface.

7. Blade according to one of Claims 4 to 6, **characterized in that** the graphene structures (11a, 11b, 11c, 11d, 11e) are arranged substantially parallel to one another around a shaped body (13, 33) in such a way that they follow the outer contour of the shaped body (13, 33).

8. Blade according to one of the preceding claims, **characterized in that** the graphene is localized and/or aligned and/or increased in thickness in accordance with a direction of stress on the blade due to impinging particles during the operation of the turbomachine (7).

9. Blade according to one of the preceding claims, **characterized in that** it comprises a protective layer (15, 17) on an outer envelope of the blade airfoil (3).

10. Blade according to Claim 9, **characterized in that** the protective layer comprises a shaped body (19), which is connected to other regions of the blade by connection techniques.

11. Blade according to one of the preceding claims, **characterized in that** the blade root (5) and the blade airfoil (3) have superimposed and interconnected layer plies (11a), at least in a transitional region (23), said plies extending at least partially over the transitional region (23).

12. Thermal turbomachine (7) having a rotational axis (A), from which a number of blades (1) projects substantially radially, **characterized in that** at least one of the blades (1) is designed according to one of Claims 1 to 11.

13. Method for producing a blade (1) for a thermal turbomachine (7), comprising a blade airfoil (3) with a first extent (E₁) in a substantially radial orientation in relation to a rotational axis (A) of the turbomachine (7) and a second extent (E₂), which is formed transversely to the first extent (E₁), and comprising a blade root (5), which adjoins the blade airfoil (3) and terminates the blade airfoil (3) in the first extent (E₁), **characterized in that** the blade (1) is furnished with graphene at least in some region or regions in a localized manner in an inner region, away from a surface region (27), in order to ensure a kind of core stability of the blade.

14. Method according to Claim 13, **characterized in that** the blade (1) is composed of a number of preshaped individual parts (13, 15), wherein at least one of the individual parts comprises graphene and/or is furnished with graphene.

## Revendications

1. Aube (1) pour une turbomachine thermique (7), comprenant une pale (3) ayant une première étendue (E₁) selon une orientation sensiblement radiale par rapport à un axe de rotation (A) de la turbomachine (7) et une deuxième étendue (E₂) formée transversalement à ladite première étendue, ainsi qu'un pied (5) se raccordant à la pale (3), et terminant la pale (3) dans la première étendue (E1), **caractérisée en ce que** l'aube, localisée dans une zone intérieure, opposée à une région de surface (27), afin de garantir une sorte de stabilité centrale, comprend du graphène au moins par endroits.

2. Aube selon la revendication 1, **caractérisée en ce que** le graphène entoure un corps intérieur (13, 33) préformé.

3. Aube selon l'une des revendications précédentes, **caractérisée en ce que** le graphène se présente au moins par endroits sous forme de corps moulé (13) homogène.

4. Aube selon l'une des revendications précédentes, **caractérisée en ce que** le graphène se présente au moins par endroits sous forme d'une ou de plusieurs épaisseurs de structures de graphène (11a, 11b, 11c, 11d, 11e) de type couche et/ou feuille.

5. Aube selon la revendication 4, **caractérisée en ce que** les structures de graphène (11a, 11b, 11c, 11d, 11e) sont liées au moins par endroits par imprégnation et/ou fusion et/ou collage.

6. Aubes selon la revendication 4 ou 5, **caractérisée en ce qu'**au moins une partie des structures de graphène (11a, 11b, 11c, 11d, 11e) sont orientées sensiblement parallèlement les unes aux autres le long d'une surface d'évolution.

7. Aube selon l'une des revendications 4 à 6, **caractérisée en ce que** les structures de graphène (11a, 11b, 11c, 11d, 11e) sont disposées sensiblement parallèlement les unes aux autres autour d'un corps moulé (13, 33), de sorte qu'elles suivent le contour extérieur du corps moulée (13, 33).

8. Aube selon l'une des revendications précédentes, **caractérisée en ce que**, en fonction d'une direction de charge de l'aube par des particules rencontrées en fonctionnement de la turbomachine (7), le graphène est localisé et/ou orienté et/ou renforcé en épaisseur.

9. Aube selon l'une des revendications précédentes, **caractérisée en ce qu'**elle comprend une couche de protection (15, 17) sur une enveloppe extérieure de la pale (3).

10. Aube selon la revendication 9, **caractérisée en ce que** ladite couche de protection comprend un corps moulé (19) raccordé à d'autres parties de l'aube par des techniques de raccordement.

11. Aube selon l'une des revendications précédentes, **caractérisée en ce que** le pied (5) et la pale (3) présentent, au moins dans une zone de transition (23), des couches (11a) superposées et liées entre elles, qui s'étendent au moins partiellement au-delà de la zone de transition (23).

12. Turbomachine thermique (7) comprenant un axe de rotation (A) duquel un certain nombre d'aubes (1) fait sensiblement radialement saillie, **caractérisée en ce qu'**au moins une des aubes (1) est réalisée selon l'une des revendications 1 à 11.

13. Procédé de fabrication d'une aube (1) pour une turbomachine thermique (7), comprenant une pale (3) ayant une première étendue (E₁) selon une orientation sensiblement radiale par rapport à un axe de rotation (A) de la turbomachine (7) et une deuxième étendue (E₂) formée transversalement à la première étendue (E₁), ainsi qu'un pied (5) se raccordant à la pale (3), et terminant la pale (3) dans la première étendue (E1), **caractérisé en ce que** l'aube (1), localisée dans une zone intérieure, opposée à une région de surface (27), afin de garantir une sorte de stabilité centrale, est pourvue de graphène au moins par endroits.

14. Procédé selon la revendication 13, **caractérisé en ce que** l'aube (1) est composée d'un certain nombre d'éléments (13, 15) préformés, au moins un desdits éléments comprenant du graphène et/ou étant pourvu de graphène.
